# EUROPÄISCHE PATENTSCHRIFT

(11) **EP 1 496 380 B1**
(45) Veröffentlichungstag und Bekanntmachung des Hinweises auf die Patenterteilung: **11.05.2016**
(21) Anmeldenummer: 04015569.9
(22) Anmeldetag: 02.07.2004
(51) Int. Cl.: G02B 6/42, B60Q 3/02, B64D 11/00, F21V 31/04, F21S 8/02, F21V 21/04, B64C 27/82, F21Y 101/00

(54) **Leuchtelement mit einer Leuchtdiode**
Lighting element with LED
Elément d'éclairage avec diode électroluminescente

(30) Priorität: 09.07.2003 DE 10331076
(43) Veröffentlichungstag der Anmeldung: 12.01.2005
(73) Patentinhaber: Diehl Aerospace GmbH, 88662 Überlingen (DE); Airbus Operations GmbH, 21129 Hamburg (DE)
(72) Erfinder: Schevardo, Dirk-Achim, 91230 Kainsbach (DE); Kohlmeier-Beckmann, Carsten, 21614 Buxtehude (DE); Müller, Volker, 88483 Burgrieden (DE)
(74) Vertreter: Diehl Patentabteilung

(56) Entgegenhaltungen:
- EP-A- 1 031 464
- EP-A- 1 293 382
- WO-A-02/087781
- DE-A- 19 843 330
- GB-A- 2 026 235
- US-A- 5 647 658
- US-A- 5 938 321
- US-A1- 2004 057 251

## Beschreibung

Die Erfindung betrifft ein Leuchtelement mit einer Leuchtdiode nach dem Oberbegriff des Patentanspruchs 1. Ein gattungsgemäßes Leuchtelement ist in EP 1 031 464 A2 offenbart.

Aus der DE 198 43 330 A1 ist eine Flugzeugkabinen-Beleuchtung bekannt, welche aus mehreren, an oder in der Decke einer Flugzeugkabine angebrachten, punktförmigen Lichtquellen besteht, wobei die punktförmigen Lichtquellen mindestens eine Leuchtdiode aufweisen, welche ihr Licht direkt in das Innere der Flugzeugkabine abstrahlen.

In der DE 196 32 699 A1 ist eine Orientierungsanzeige auf Lichtleiterbasis offenbart, bei welcher Lichtleiter von mindestens zwei Leuchtdioden angestrahlt werden und Oberflächenveränderungen an der Längsseite des Lichtleiters zu einer Abgabe von Licht in Form von Strichen, Linien, Punkten, Symbolen u. a. zum Zweck einer Markierung führen.

In der DE 41 42 175 A1 ist eine Anzeigeeinrichtung für Flugzeuge beschrieben, welche flache Lichtleitelemente aufweist, in deren Rand Leuchtdioden in Reihen angeordnet sind.

Die Leuchtelemente nach dem genannten Stand der Technik haben den Nachteil, dass ihre leuchtende Fläche eine bestimmte Mindestgröße hat.

Es ist nun Aufgabe der Erfindung, ein Leuchtelement zu schaffen, dessen leuchtende Fläche besonders klein ist.

Diese Aufgabe wird von einem Leuchtelement mit den Merkmalen des Patentanspruchs 1 erfüllt. Vorteilhafte Ausgestaltungen und Weiterbildungen der Erfindung ergeben sich aus den abhängigen Ansprüchen.

Der Kern der Erfindung liegt darin, dass das Licht einer Leuchtdiode in ein Lichtleitelement eingekoppelt wird und dieses Lichtleitelement eine Lichtaustrittsfläche besitzt, welche beliebig klein, auf jeden Fall aber kleiner als die der Leuchtdiode ist.

Bevorzugt ist das Lichtleitelement wie die Leuchtdiode in einem Leuchtenträger eingebaut und die Lichtaustrittsfläche des Lichtleitelements bündig mit der Oberfläche des Leuchtenträgers angeordnet, wodurch erreicht wird, dass die Lichtaustrittsfläche bei ausgeschalteter Leuchtdiode nahezu unsichtbar ist. Darüber hinaus kann sie plan und/oder zusätzlich auch angeraut ausgeführt sein, damit das Licht diffus bzw. auch in einem flachen Winkel aus dem Lichtleitelement austritt.

In bevorzugter Ausführungsform weist das Lichtleitelement eine Einbuchtung auf, in welche die Leuchtdiode eingesteckt werden kann, so dass ein Großteil der lichtabstrahlenden Oberfläche der Leuchtdiode von dem Lichtleitelement umhüllt ist und somit ein Großteil des von der Leuchtdiode emittierten Lichts in das Lichtleitelement eingekoppelt wird. Zur Optimierung der Lichteinkopplung in das Lichtleitelement kann zwischen Leuchtdiode und Lichtleitelement ein Einkoppelmedium vorgesehen sein. Bevorzugt wird die Leuchtdiode jedoch so eingesteckt, dass zwischen ihr und dem Lichtleitelement ein Luftspalt bleibt, damit bei Druckunterschieden, wie sie besonders beim Einsatz in Flugzeugen auftreten, die Leuchtdiode nicht durch evtl. eingeschlossene Luftblasen aus dem Lichtleitelement herausgedrückt wird.

Zur Vibrationsdämpfung ist die Leuchtdiode in dem Leuchtenträger mit Silikon vergossen, was eine sichere Befestigung bewirkt, daneben aber auch ein Auswechseln der Leuchtdiode ermöglicht.

In Weiterbildung der Erfindung sind die Leuchtdiode und das Lichtleitelement in einer Buchse gehaltert, welche in dem Leuchtenträger eingebaut ist. Dabei sind die Lichtaustrittsfläche des Lichtleitelements, die Stirnfläche der Buchse und die Oberfläche des Leuchtenträgers vorzugsweise bündig ausgerichtet, um die Lichtaustrittsfläche bei ausgeschalteter Leuchtdiode nahezu unsichtbar zu machen. Die Buchse wird im Leuchtenträger verklebt und weist Kanäle auf, die es ermöglichen, dass überschüssiger Klebstoff nach außerhalb des Leuchtenträgers entweichen kann.

In einer bevorzugten Ausführungsform der Erfindung stellt die Decke oder die Wand einer Flugzeugkabine den Leuchtenträger dar, werden weiße Leuchtdioden verwendet und/oder bilden eine Vielzahl von Leuchtelementen eine Effektbeleuchtung.

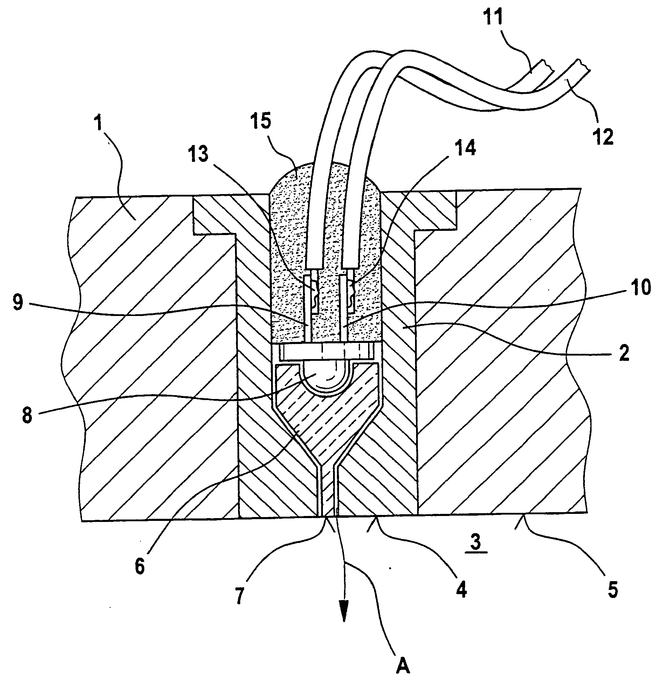

Im Folgenden soll die Erfindung anhand der Zeichnung näher erläutert werden. Die Figur zeigt einen Querschnitt durch ein Decken- oder Wand-Panel einer Flugzeugkabine mit darin eingebautem Leuchtelement.

In der Decke 1 einer Flugzeugkabine ist in einer Bohrung eine Buchse 2 verklebt. Der Innendurchmesser der Buchse 2 verengt sich in Richtung des Innenraums 3 der Flugzeugkabine. Die untere Stirnseite 4 der Buchse 2 ist bündig mit der zum Innenraum 3 der Flugzeugkabine weisenden Oberfläche 5 der Kabinendecke 1 angeordnet und genau wie diese lackiert. Im unteren Bereich der Buchse 2 sitzt ein Lichtleitkörper 6. Dieser besteht aus einem für Licht transparenten Material wie z. B. Polycarbonat und folgt in seiner Form dem Inneren der Buchse, so dass er sich in Richtung des Innenraums 3 der Flugzeugkabine verjüngt. Die Lichtaustrittsfläche 7 des Lichtleitkörpers 6 ist bündig mit der Stirnfläche 4 der Buchse 2 und der Oberfläche 5 der Kabinendecke 1 ausgerichtet und darüber hinaus aufgeraut ausgeführt ("angeschliffen"). Sie kann kreisförmig, drei- oder mehreckig oder auch in beliebiger anderer Form ausgeführt sein.

Auf der der Lichtaustrittsöffnung 7 entgegengesetzten Seite des Lichtleitkörpers 6 ist eine Einbuchtung ausgeformt, welche an die Kontur einer Leuchtdiode 8 angepasst ist und in welche die Leuchtdiode 8 so eingesteckt ist, dass die gesamte lichtabstrahlende Fläche der Leuchtdiode 8 von dem Lichtleitelement 6 umgeben ist und darüber hinaus ein Luftspalt zwischen Leuchtdiode 8 und Lichtleitelement 6 bestehen bleibt. Da auch zwischen dem Lichtleitelement 6 und der Buchse 2 ein Luftspalt vorhanden ist (eventuell durch entsprechend ausgeformte Kanäle), ist ein Druckausgleich zwischen dem Bereich zwischen Leuchtdiode 8 und Lichtleitelement 6 und dem Innenraum 3 der Flugzeugkabine möglich (siehe Pfeil A).

An die Anschlussbeinchen 9 und 10 der Leuchtdiode 8 sind Anschlusskabel 11 und 12 mittels Ademendhülsen 13 und 14 aufgeschweißt. Über die Anschlusskabel 11 und 12 ist die Leuchtdiode 8 an eine Strom- bzw. Spannungsversorgung oder ein entsprechendes Steuergerät angeschlossen.

Der Raum innerhalb der Buchse 2 oberhalb der Leuchtdiode 8 ist mit Silikon 15 vergossen, so dass die Leuchtdiode 8 zum einen sicher in der Buchse 2 befestigt ist, zum anderen aber auch bei Bedarf herausgenommen und ausgetauscht werden kann.

Das Licht der Leuchtdiode 8 wird in den Lichtleitkörper 6 eingekoppelt, gelangt aufgrund Totalreflexion zur Austrittsfläche 7 und strahlt von dort in den Kabineninnenraum 3. Da die Lichtaustrittsfläche 7 sehr klein - vor allem auch deutlich kleiner als die Querschnittsfläche einer Leuchtdiode - gewählt werden kann (Durchmesser etwa 1 mm), ist sie von einem Betrachter vom Kabineninnenraum 3 aus bei ausgeschalteter Leuchtdiode 8 kaum zu erkennen, während bei eingeschalteter Leuchtdiode 8 ein heller Leuchtpunkt zu sehen ist. Dieser Leuchtpunkt ist aufgrund der Aufrauung der Lichtaustrittsfläche 7 aus allen Richtungen, also auch aus sehr flachen Betrachtungswinkeln, gut zu sehen. Auf diese Weise kann mit Hilfe der Erfindung eine Effektbeleuchtung in einem Flugzeug realisiert werden, welche bei ausgeschalteter Leuchtdiode nicht sichtbar ist, bei eingeschalteter Leuchtdiode jedoch einen hellen Leuchtpunkt aufweist, wobei die Leuchtdiode 8 mit gleichmäßiger Helligkeit, blinkend oder auch flackernd (heller leuchtend - dunkler leuchtend) angesteuert werden kann.

## Patentansprüche

1. Leuchtelement mit einer Leuchtdiode (LED) (8), welches in einem durch eine Decke oder Wand gebildeten Leuchtenträger (1) eingebaut ist, wobei ein Lichtleitelement (6) an die Leuchtdiode (8) optisch angekoppelt ist und dieses Lichtleitelement (6) eine kleinere Lichtaustrittsfläche (7) aufweist als die Leuchtdiode (8),
wobei die Leuchtdiode (8) und das Lichtleitelement (6) in einer Buchse (2) gehaltert sind, welche in dem Leuchtenträger (1) eingebaut ist, **dadurch gekennzeichnet, dass**
die Lichtaustrittsfläche (7) des Lichtleitelements (6) mit der Stirnfläche (4) der Buchse (2) und/oder der Oberfläche (5) des Leuchtenträgers (1) bündig ist.

2. Leuchtelement nach Anspruch 1,
**dadurch gekennzeichnet,**
**dass** die Lichtaustrittsfläche (7) des Lichtleitelements (6) plan und/oder angeraut ist.

3. Leuchtelement nach einem der Ansprüche 1 oder 2,
**dadurch gekennzeichnet,**
**dass** das Lichtleitelement (6) derart geformt ist, dass die Leuchtdiode (8) in eine Einbuchtung des Lichtleitelementes (6) derart steckbar ist, dass ein Großteil der lichtabstrahlenden Oberfläche der Leuchtdiode (8) von dem Lichtleitelement (6) umhüllt ist.

4. Leuchtelement nach einem der vorherigen Ansprüche,
**dadurch gekennzeichnet,**
**dass** zwischen Leuchtdiode (8) und Lichtleitelement (6) ein Luftspalt vorgesehen ist.

5. Leuchtelement nach einem der vorherigen Ansprüche,
**dadurch gekennzeichnet,**
**dass** die Leuchtdiode (8) mit Silikon (15) vergossen und in dem Leuchtenträger (1) lösbar befestigt ist.

6. Leuchtelement nach Anspruch 1,
**dadurch gekennzeichnet,**
**dass** die Buchse (2) im Leuchtenträger (1) verklebt ist und Kanäle aufweist, durch die überschüssiger Klebstoff nach außerhalb des Leuchtenträgers (1) entweichen kann.

7. Leuchtelement nach einem der vorherigen Ansprüche,
**dadurch gekennzeichnet,**
**dass** der Leuchtenträger (1) die Decke oder Wand einer Flugzeugkabine ist, dass die Leuchtdiode (8) weißes Licht abstrahlt und/oder dass das Leuchtelement Teil einer Effektbeleuchtung ist.

## Claims

1. Lighting element comprising a light emitting diode (LED) (8), said lighting element being incorporated in a luminaire carrier (1) formed by a ceiling or wall,
wherein a light guiding element (6) is optically coupled to the light emitting diode (8) and said light guiding element (6) has a smaller light exit surface (7) than the light emitting diode (8),
wherein the light emitting diode (8) and the light guiding element (6) are mounted in a bush (2) incorporated in the luminaire carrier (1),
**characterized in that** the light exit surface (7) of the light guiding element (6) is flush with the end face (4) of the bush (2) and/or the surface (5) of the luminaire carrier (1).

2. Lighting element according to Claim 1,
**characterized**
**in that** the light exit surface (7) of the light guiding element (6) is planar and/or roughened.

3. Lighting element according to either of Claims 1 and 2,
**characterized**
**in that** the light guiding element (6) is shaped in such a way that the light emitting diode (8) is insertable into an indentation of the light guiding element (6) in such a way that a large part of the light emitting surface of the light emitting diode (8) is enclosed by the light guiding element (6).

4. Lighting element according to any of the preceding claims,
**characterized**
**in that** an air gap is provided between light emitting diode (8) and light guiding element (6).

5. Lighting element according to any of the preceding claims,
**characterized**
**in that** the light emitting diode (8) is potted with silicone (15) and is fixed releasably in the luminaire carrier (1).

6. Lighting element according to Claim 1,
**characterized**
**in that** the bush (2) is adhesively bonded in the luminaire carrier (1) and has channels through which excess adhesive can escape to outside the luminaire carrier (1).

7. Lighting element according to any of the preceding claims,
**characterized**
**in that** the luminaire carrier (1) is the ceiling or wall of an aircraft cabin, in that the light emitting diode (8) emits white light and/or in that the lighting element is part of an effect lighting.

## Revendications

1. Elément d'éclairage doté d'une diode luminescente (LED) (8) qui est incorporée dans un porte-lampe (1) formé par un plafond ou une paroi,
un élément (6) conducteur de lumière étant raccordé optiquement à la diode luminescente (8) et cet élément (6) conducteur de lumière présentant une surface (7) de sortie de lumière plus petite que la diode luminescente (8),
la diode luminescente (8) et l'élément (6) conducteur de lumière étant maintenus dans une douille (2) incorporée dans le support de lampe (1), **caractérisé en ce que**
la surface (7) de sortie de lumière de l'élément (6) conducteur de lumière se raccorde à chant à la surface frontale (4) de la douille (2) et/ou à la surface (5) du support de lampe (1).

2. Elément d'éclairage selon la revendication 1, **caractérisé en ce que** la surface (7) de sortie de lumière de l'élément (6) conducteur de lumière est plane et/ou rendue rugueuse.

3. Elément d'éclairage selon l'une des revendications 1 ou 2, **caractérisé en ce que** l'élément (6) conducteur de lumière est configuré de telle sorte que la diode luminescente (8) puisse être enfichée dans un creux de l'élément (6) conducteur de lumière de telle sorte qu'une partie principale de la surface émettant la lumière de la diode luminescente (8) soit entourée par l'élément (6) conducteur de lumière.

4. Elément d'éclairage selon l'une des revendications précédentes, **caractérisé en ce qu'**un interstice d'air est prévu entre la diode luminescente (8) et l'élément (6) conducteur de lumière.

5. Elément d'éclairage selon l'une des revendications précédentes, **caractérisé en ce que** la diode luminescente (8) est coulée dans du silicone (15) et est fixée de manière libérable dans le support (1) de lampe.

6. Elément d'éclairage selon la revendication 1, **caractérisé en ce que** la douille (2) est collée dans le support (1) de lampe et présente des canaux par lesquels l'adhésif en excès peut s'échapper hors du support (1) de lampe.

7. Elément d'éclairage selon l'une des revendications précédentes, **caractérisé en ce que** le support (1) de lampe est le plafond de la paroi d'une cabine d'aéronef, **en ce que** la diode luminescente (8) émet de la lumière blanche et/ou **en ce que** l'élément de lampe fait partie d'un éclairage à effet.
